# EUROPÄISCHE PATENTSCHRIFT

(11) **EP 3 998 876 B1**
(45) Veröffentlichungstag und Bekanntmachung des Hinweises auf die Patenterteilung: **30.10.2024**
(21) Anmeldenummer: 20724004.5
(22) Anmeldetag: 23.04.2020
(51) Int. Cl.: A24C 5/34, G01N 22/04

(54) **ZIGARETTENMASCHINE MIT EINEM SAUGBANDFÖRDERER**
CIGARETTE MACHINE COMPRISING A SUCTION BELT CONVEYOR
CONFECTIONNEUSE DE CIGARETTES POURVUE D'UNE BANDE TRANSPORTEUSE D'ASPIRATION

(30) Priorität: 15.07.2019 DE 202019103894 U
(43) Veröffentlichungstag der Anmeldung: 25.05.2022
(73) Patentinhaber: TEWS Elektronik GmbH & Co. KG, 22459 Hamburg (DE)
(72) Erfinder: SCHLEMM, Udo, 22607 Hamburg (DE)
(74) Vertreter: Hauck Patentanwaltspartnerschaft mbB
(86) Internationale Anmeldenummer: PCT/EP2020/061304
(87) Internationale Veröffentlichungsnummer: WO 2021/008745

(56) Entgegenhaltungen:
- EP-A2- 0 259 071
- EP-A2- 3 593 653
- DE-A1- 102015 119 453
- DE-A1- 3 725 366

## Beschreibung

Die vorliegende Erfindung betrifft eine Zigarettenmaschine mit einem Saugbandförderer für die tabakverarbeitende Industrie.

Es ist hinlänglich bekannt, die Dichte eines Tabakstrangs bei der Herstellung auf einer Zigarettenmaschine bzw. auf einer Strangmaschine mit elektromagnetischen Messeinrichtungen zu überwachen. Überwacht wird hierbei der Einsatz von Tabak an der Maschine mit Hilfe eines gemessenen Dichtesignals, wobei diese Messung herkömmlich nach der Strangformung erfolgt, wenn der Tabak strangförmig vorliegt und bereits von Papier umhüllt ist.

Im Rahmen neuer Tabakprodukte, die beispielsweise Tabak erhitzen und nicht verbrennen, sogenannte Heat-not-Bum-Produkte, erfolgt die Herstellung von Tabaksträngen unter Verwendung einer Metallfolie. Bei solchen Produkten ist der Tabakstrang also von Metallfolie umgeben, so dass eine elektromagnetische Messvorrichtung, insbesondere auch eine Mikrowellenmessvorrichtung nicht länger zur Messung eingesetzt werden kann.

Aus WO 2016/162292 A1 ist ein Saugbandförderer einer Strangmaschine der tabakverarbeitenden Industrie bekannt geworden. Der Saugbandförderer dient dazu, Material, insbesondere Tabak, in einem nach unten offenen Strangführungskanal den Einrichtungen zur Strangbildung zuzuführen. Der Strangführungskanal ist seitlich durch zwei einander gegenüberliegende Kanalwangen begrenzt. Ein Saugband ist oben an dem Strangführungskanal angeordnet, so dass Kanalwangen und Saugband eine U-förmige Begrenzung für den Strangführungskanal bilden. Für einen solchen Saugbandförderer ist vorgeschlagen worden, zur Bestimmung von Eigenschaften des geförderten Materials an wenigstens einer Position entlang dem Förderweg wenigstens eine elektromagnetische Messeinrichtung in die Kanalwangen des Saugbandförderers zu integrieren. Die Messung bereits im Strangführungskanal des Saugbandförderers wird vorgenommen, um zu einem frühen Zeitpunkt ohne störende Einflüsse des Papiers eine Messung von Materialeigenschaften zu erzielen. Im Hinblick auf den erforderlichen Saugbandwechsel wird die Integration in die Kanalwangen als vorteilhaft angesehen. Die Integration der Sensoren in die Kanalwangen besitzt jedoch Nachteile im Hinblick auf die erreichbare Messgenauigkeit, insbesondere bei der Messung der Dichte des Tabaks im Führungskanal.

Aus DE 37 25 366 A1 ist eine Vorrichtung zur Messung der Dichte eines Tabakstrangs an einer Zigarettenstrangmaschine bekannt geworden. Zu Messzwecken wird eine Strahlungsquelle zum Aussenden einer in den Strang eindringenden Strahlung und mindestens ein Strahlungsempfänger eingesetzt. Die Strahlungsquelle und der Strahlungsempfänger sind jeweils derart angeordnet, dass der Strahlungsempfänger außerhalb des direkten Strahlengangs der Strahlungsquelle liegt. Der Transport des Tabaks erfolgt hierbei in einem Tabakkanal und einem Saugstrangförderer, wobei Strahlungsquelle und Strahlungsempfänger auf Infrarotlichtstrahlung abstellen.

DE 10 2015 119 453 stellt einen Saugbandförderer vor, der bei einer Maschine zur Herstellung von Tabakfolie eingesetzt wird. Im Bereich des Saugbandförderers sind mindestens zwei oder drei Hochfrequenz- und/oder Mikrowellensensoren angeordnet, durch deren Messbereich die Tabakfolie und ein Förderband des Saugbandförderers läuft.

EP 3 593 653 A2 beschreibt eine Messvorrichtung für einen Saugbandförderer einer Strangmaschine der tabakverarbeitenden Industrie zur Förderung von Tabak. Die Messvorrichtung ist zur Bestimmung von Eigenschaften entlang des Förderweges des Tabaks vorgesehen und besitzt eine Mikrowellenmesseinrichtung mit wenigstens einem Resonatorhohlraum. In einem dritten Ausführungsbeispiel wird der Resonatorhohlraum nach unten hin geöffnet und in eine darunter angeordneten Einführklotz mit einem vierten Abschnitt des Resonatorhohlraumes der effektive Resonatorhohlraum vergrößert. EP 3 593 653 A2 ist Stand der Technik nach Art. 54 (3) EPÜ.

Der Erfindung liegt die Aufgabe zugrunde, eine Zigarettenmaschine mit einem Saugbandförderer für die tabakverarbeitende Industrie bereitzustellen, dessen elektromagnetische Messeinrichtung zuverlässige Messergebnisse im Hinblick auf die Masse des transportierten Materials liefert.

Erfindungsgemäß wird die Aufgabe durch eine Zigarettenmaschine mit einem Saugbandförderer mit einer elektromagnetischen Messeinrichtung gemäß Anspruch 1 gelöst sowie durch eine Verwendung derselben nach dem Anspruch 8. Vorteilhafte Ausgestaltungen bilden die Gegenstände der Unteransprüche.

Die erfindungsgemäße Zigarettenmaschine mit einem Saugbandförderer gemäß Anspruch 1 ist vorgesehen und bestimmt für die tabakverarbeitende Industrie. Der Saugbandförderer weist einen Strangführungskanal auf, der an einer Seite durch das das Material fördernde Saugband und angrenzend daran durch zwei einander gegenüberliegende Kanalwangen begrenzt ist. Eine elektromagnetische Messeinrichtung mit einem Resonator ist ebenfalls vorgesehen. Das in dem Strangführungskanal transportierte Material, insbesondere der Tabak, wechselwirkt mit dem elektromagnetischen Feld in dem Resonator der Messeinrichtung. Die gemessenen Signale sind abhängig von den dielektrischen Eigenschaften des Materials. Der Resonator weist zwei Resonatorhälften auf, von denen eine erste auf der Seite des Strangführungskanals mit dem fördernden Saugband und die zweite auf der der ersten Resonatorhälfte gegenüberliegenden Seite angeordnet ist. Das Ein- und Auskoppeln der Mikrowellensignale erfolgt an der zweiten Resonatorhälfte, die fest an der Zigarettenmaschine befestigt ist. Die beiden Resonatorhälften sind nicht in die Kanalwangen integriert. Der Saugbandförderer beruht auf der technischen Erkenntnis, dass die Messung, insbesondere der Masse des Materials, hohe Anforderungen an die Homogenität des Messfeldes stellt. Für eine präzise Messung muss das Messfeld im Bereich des Materials bzw. im Bereich des fördernden Saugbandes möglichst homogen sein. Bei der vertikalen räumlichen Anordnung der Resonatorhälften des Hohlraumresonators ist am Ort des Tabaks eine höhere Feldhomogenität erzielbar als bei einer möglichen horizontalen Anordnung. Somit können genauere und zuverlässigere Messergebnisse erreicht werden.

In einer bevorzugten Ausgestaltung ist die elektromagnetische Messeinrichtung als ein Mikrowellenresonator ausgebildet, dessen Resonatorhohlraum durch die beiden einander gegenüberliegenden Resonatorhälften gebildet ist. Normalerweise ist bei dieser Form von Mikrowellenresonatoren eine starre Verbindung der Resonatorhälften vorhanden, so dass der gesamte Resonator U- oder hufeisenförmig ist, um stabile Resonanzeigenschaften im Hinblick auf die Resonanzfrequenz und die Güte, bzw. die Halbwertsbreite der Resonanzkurve zu erzielen. Bei der erfindungsgemäßen Lösung mit zwei getrennten Resonatorhälften ist darauf zu achten, dass diese möglichst genau einander gegenüberliegend positioniert sind. Das Signal eines Mikrowellenresonators ist proportional zu der im Messfeld befindlichen Masse des Messgutes. Eine Messung des Volumens des Messgutes ist mit dieser Messeinrichtung nicht möglich. Deshalb ist die Bestimmung einer Dichte nur möglich, wenn das Volumen des Messgutes konstant oder bekannt ist. Bei der Zigarettenherstellung ist dies der Fall, da der Durchmesser der Zigaretten konstant ist und eine Dichtekalibration erfolgen kann. Es wird also streng genommen die Masse für eine Längeneinheit gemessen und durch die Volumenkonstanz auf Masse pro Volumeneinheit umgerechnet. Durch Integration des Dichtesignals über eine Zigarettenlänge erhält man die Masse des eingesetzten Tabaks.

Auch bei der Messung am Saugband kann man davon ausgehen, daß der transportierte Tabak mit derselben längenbezogenen Massenverteilung in einen Zigarettenstrang umgeformt wird und dadurch eine Dichtemessung definieren, auch wenn die Messsignale eine Massemessung durchführen. Der Begriff der "Massenmessung" und der Begriff "Dichtemessung" werden in der vorliegenden Anmeldung synonym verwendet.

Als vorteilhaft hat sich herausgestellt, die beiden Resonatorhälften zentriert zwischen den seitlichen Kanalwangen zu positionieren. Die Kanalwangen sind zumindest im Bereich der elektromagnetischen Messeinrichtung bevorzugt aus Keramik oder Kunststoff hergestellt. Sie haben einen konstanten Einfluss auf das Messfeld des Resonators, der durch eine tarierende Messung der Leerresonanzwerte eliminiert werden kann.

In einer bevorzugten Ausgestaltung ist die erste Resonatorhälfte angrenzend an das Saugband, am Saugbandförderer angeordnet und kann zusammen mit dem Saugbandförderer positioniert werden. Hintergrund hierfür ist, dass das Saugband selbst ein Verschleißgegenstand ist, das regelmäßig, beispielsweise nach jeder Schicht, ausgetauscht wird. Hierzu wird der gesamte Saugbandförderer inklusive der ersten Resonatorhälfte nach oben verfahren. Nach dem Saugbandwechsel wird der Saugbandförderer wieder in seine ursprüngliche Position gebracht. Erfindungsgemäß ist die erste Resonatorhälfte mit dem beweglich montierten Saugbandförderer verbunden. Somit wird die erste Resonatorhälfte gemeinsam mit dem Saugbandförderer bewegt und wieder in Position gebracht.

Die zweite Resonatorhälfte ist bevorzugt angrenzend an den Strangführungskanal positioniert. Sie ist an der Maschine angeordnet. Bei einem Wechseln des Saugbandes oder anderen Tätigkeiten an dem Saugbandförderer kann die zweite Resonatorhälfte in Position montiert bleiben.

Bevorzugt ist die elektromagnetische Messeinrichtung zwischen den Trimmerscheiben und der Zone der Strangformung angeordnet. Da der Einsatz der Masse des Tabaks in den Tabakstrang durch die Trimmerscheiben geregelt wird, hat der Tabak in diesem Bereich das Masseprofil, das später im fertig geformten Strang vorliegt. Für genaue und zeitlich konstante Messergebnisse hat es sich als vorteilhaft herausgestellt, eine Heizeinrichtung an der elektromagnetischen Messeinrichtung vorzusehen, die eine oder beide Resonatorhälften beheizt. Das Beheizen auf eine konstante Temperatur kann auch über eine Regelung erfolgen. Durch ein Beheizen werden Abweichungen in den Messsignalen vermieden.

Weiterhin hat es sich als vorteilhaft herausgestellt, eine Drucklufteinrichtung vorzusehen, mit der die Resonatorhälften gereinigt werden können. Insbesondere kann die Reinigung auch während des Betriebs erfolgen, um Messfehler aufgrund von Rückständen zu vermeiden. Bevorzugt ist die elektromagnetische Messeinrichtung dazu ausgebildet, Masse/Dichte und/oder Feuchte des geförderten Materials zu messen.

Der wird in einer erfindungsgemäßen Zigarettenmaschine eingesetzt. Hier werden die Messergebnisse der elektromagnetischen Messeinrichtung zur Messung einer Tabakmasse herangezogen. Die Tabakmasse wird dabei bevorzugt bezogen auf eine Referenzlänge und/oder auf ein Tabakprodukt gemessen. Insbesondere aufgrund der großen erzielten Messgenauigkeit durch die Anordnung der Sensorhälften kann auch eine Regelung der Tabakmasse mit Hilfe der Messergebnisse über die Trimmerscheiben erfolgen.

Bei der Mikrowellen-Resonatormessung werden die an dem Messgut gemessenen Resonanzparameter immer auf die Resonanzparameter des leeren Resonators bezogen. Hierzu erfolgt eine tarierende Leermessung, die üblicherweise mit dem leeren Resonator durchgeführt wird. Die ist in diesem Fall nicht möglich, da sich das Saugband dauerhaft im Resonator befindet.

In einer bevorzugten Ausführung erfolgt eine tarierende Messung deshalb an einem leeren Saugband. Die tarierende Messung erfolgt dabei entweder an einer Position oder in einem definierten Bereich, an mehreren Positionen oder in mehreren definierten Bereichen oder für mindestens einen vollständigen Umlauf des Saugbandes. Die tarierende Messung ermittelt den Beitrag des leeren Messraums auf die Messsignale. Hierzu trägt beispielsweise das in dem Messbereich befindliche Saugband bei, aber auch die Kanalwände und der Abstand zwischen den Resonatorhälften. Mit Hilfe der tarierenden Messung werden die später mit durch das Saugband transportiertem Tabak aufgezeichneten Messwerte korrigiert, um zuverlässige Masse- und Feuchtewerte für den Tabak zu bestimmen.

Es hat sich als besonders vorteilhaft herausgestellt, den Strangführungskanal derart einzurichten, dass ein Schließen von diesem eine tarierende Messung auslöst. Auf diese Weise wird sichergestellt, dass nach einem Schließen des Strangführungskanals, wenn die beiden Resonatorhälften ihre relative Position zueinander verändern können, erneut eine tarierende Messung vorgenommen wird.

In einer weiter bevorzugten Ausgestaltung erfolgt eine Plausibilitätsprüfung der tarierenden Messung. Hierzu werden die Messwerte der neuen tarierenden Messung mit einem oder vorherigen Messwerten verglichen. Bei einer Abweichung um mehr als einen vorbestimmten Mindestbetrag werden beispielsweise die neuen Messwerte verworfen. Bei einer automatisierten Aufnahme mehrerer Messungen an verschiedenen Stellen des Bandes können die Messwerte mit der geringsten Abweichung zu den vorherigen Messwerten verwendet werden. Diese Plausibilitätsprüfung hat sich als besonders praktikabel erwiesen, da immer wieder die Situation auftreten kann, dass Verunreinigungen, wie beispielsweise. Krümel oder Rückstände von Tabak bei der tarierenden Messung im Strangführungskanal verbleiben und die Messergebnisse beeinflussen. Durch den Vergleich mit den vorherigen Messwerten, insbesondere den vorherigen Messwerten einer tarierenden Messung, können solche Fehler erkannt und vermieden werden. Mit Hilfe der Plausibilitätsprüfung ist es auch möglich, die bei der tarierenden Messung gewonnenen Messwerte für den Leerabgleich automatisch, ohne vorherige manuelle Prüfung, für die weitere Auswertung zu verwenden.

Ein weiterer besonderer Vorteil der Erfindung liegt darin, dass die Einflüsse einer Verbindungsstelle im Saugband zuverlässig erkannt und berücksichtigt werden können. Das Saugband ist in der Regel als endlos laufendes Band ausgebildet und besitzt eine Verbindungsstelle, die sich in der Regel durch eine größere Materialstärke und damit eine größere Masse pro Länge auszeichnet. Um die Verbindungsstelle des Saugbandes zu detektieren, kann eine Messung des leeren Saugbandes erfolgen. Die Messung des leeren Saugbandes kann dabei auch durchaus die tarierende Messung sein. Bei der Messung des leeren Saugbandes ist eine Auswerteeinrichtung dafür eingerichtet, über eine Peak-Erkennung in den Messsignalen die Verbindungsstelle des Saugbandes zu detektieren. Bevorzugt wird von der Auswerteeinrichtung die Verbindungsstelle durch einen Anstieg eines für die Masse indikativen Messsignals und/oder einen fehlenden Anstieg eines für die Feuchte indikativen Messsignals erfasst. Die Peak-Erkennung beruht auf der Erkenntnis, dass die höhere Massenbelegung des Saugbandes in Abwesenheit von Tabak ein ausreichendes Indiz für die Verbindungsstelle ist. Selbstverständlich können auch bei einem Saugband mit mehreren Verbindungsstellen diese zuverlässig erkannt werden.

Die Masseerhöhung im Bereich der Verbindungsstelle kann an dem leeren Band gemessen und die gemessenen Tabakmassen an dieser Stelle des Bandes im Produktionsbetrieb korrigiert werden.

Eine bevorzugte Ausgestaltung der Erfindung mit Anordnung der beiden Resonatorhälften wird nachfolgend näher beschrieben. Es zeigen:
- Fign. 1a, b: einen Saugbandförderer mit einem Saugband und einer Messeinrichtung sowie eine Detailansicht dieser Anordnung der Messeinrichtung,
- Fign. 2a, b: die Anordnung der Resonatorhälften am Förderkanal in einer geöffneten und einer geschlossenen Position und
- Fig. 3: Verlauf der Messsignale eines leeren Bandes mit einer Verbindungstelle.

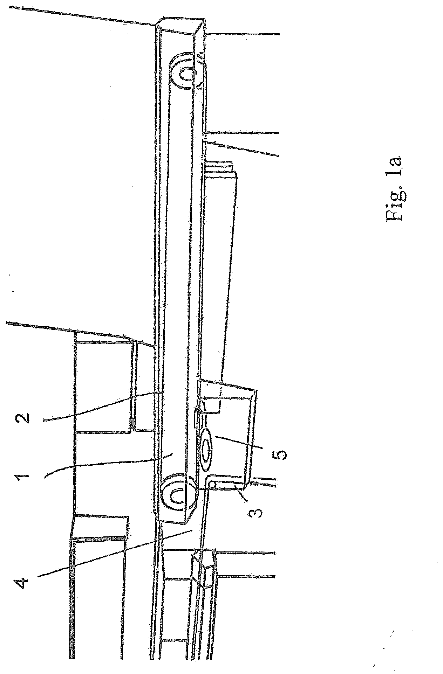

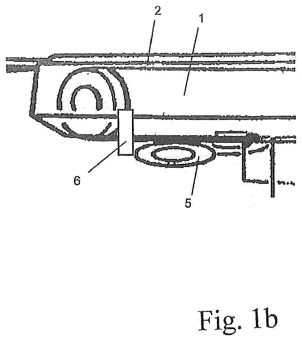

Fig. 1 zeigt einen Saugbandförderer 1, mit einem sich in Förderrichtung erstreckenden Saugband 2. Der zu verarbeitende Tabak wird mit Hilfe des Saugbandes 2 in eine Zone 4 zur Strangformung gefördert. Der Zone 4 wird Papier 3 zugeführt. Die Trimmerscheiben 5 sind nahe der Zone der Strangformung angeordnet. Detailansicht in Fig. 1b vom Kopfende des Saugbandförderers zeigt den Saugbandförderer 1 mit seinem Saugband 2 sowie die Trimmerscheiben 5. Eine Sensorposition 6 ist hier beispielhaft nahe dem Ende des Saugbandförderers angeordnet. Die Trimmerscheiben in einer Zigarettenmaschine sind die Einrichtungen zum Steuern der eingesetzten Tabakmasse. Sie sind paarweise angeordnet und zu beiden Seiten des Tabakstranges positioniert. Sie schneiden den transportierten Tabak in einer bestimmten Höhe ab, wobei die Regelung der Masse entweder durch die Variation der vertikalen Position der Scheiben erfolgt oder die Höhe des Bandes relativ zu den Trimmerscheiben verändert wird. An jedem Kanal befinden sich bevorzugt zwei gegenüberliegende Trimmerscheiben.

Das dargestellte Sensorsystem 6 ist ein Mikrowellenhohlraumresonator, der aus zwei Resonatorhälften besteht. Von diesen beiden Resonatorhälften ist die erste Resonatorhälfte oberhalb des Saugbandes angeordnet, während die zweite Resonatorhälfte unterhalb des Saugbandes, und bevorzugt auch unterhalb der seitlichen Kanalwangen, angeordnet ist.

Die Messung der Dichte des Tabaks an dem Saugband stellt hohe Anforderungen an die Homogenität des Messfeldes. Für eine präzise Messung der Dichte muss das Messfeld im Bereich des Tabaks möglichst homogen sein. Durch die Verwendung eines Mikrowellenresonators mit zwei Resonatorhälften, zwischen denen sich das Saugband flächig befindet, wird eine große Feldhomogenität im Bereich des Messguts erreicht, wodurch genaue Messergebnisse erzielt werden können.

Das den Tabak transportierende Saugband ist ein Verschleißteil, das regelmäßig, beispielsweise einmal pro Schicht, gewechselt werden muss. Hierzu wird der gesamte Saugbandförderer mechanisch nach oben verfahren, um den Wechsel des Saugbandes zu ermöglichen. Nach erfolgtem Saugbandwechsel wird der Saugbandförderer mit hoher mechanischer Präzision wieder in seine Ausgangsposition bewegt. Das Saugband besitzt eine durchweg gleichmäßige Materialverteilung, die bei einer Dichtemessung einen konstanten Beitrag zu dem Messsignalen liefert. Dieser konstante Beitrag wird durch die tarierende Leermessung eliminiert. Lediglich an einer Verbindungsstelle ist das Saugband nicht homogen, und es kann zu einer Störung der Messsignale kommen.

Der Sensor 6 umfasst einen Mikrowellenhohlraumresonator, der aus zwei Halbschalen besteht. Eine Halbschale ist direkt unter der unteren Öffnung des Strangführungskanals positioniert, und sie ist in der Zigarettenmaschine befestigt. Die zweite Halbschale ist mit dem Saugbandförderer direkt über dem Saugband positioniert und wird beim Bandwechsel zusammen mit dem Saugbandförderer verfahren. Die Funktion des Resonators ist bei verfahrenem Saugbandförderer nicht gegeben. Der Resonator baut als Hohlraumresonator möglichst klein, um das Messfeld im Transportkanal zu konzentrieren und die Funktionsweise des Saugbandes möglichst wenig zu stören.

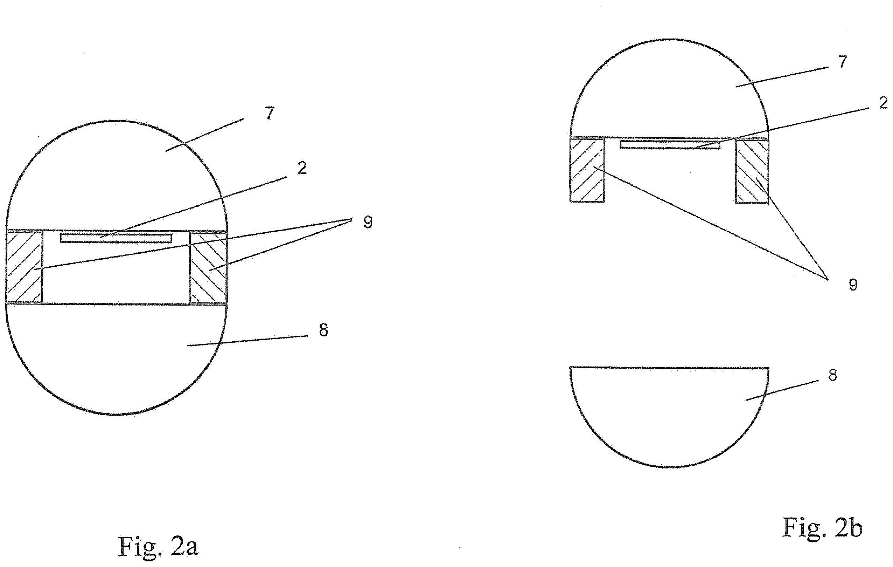

Fig. 2a zeigt die geschlossene Anordnung mit einer unteren Resonatorhälfte 8 und einer oberen Resonatorhälfte 7. Die obere Resonatorhälfte 7 ist hierbei die erste Resonatorhälfte, die auf der Seite des Strangführungskanals mit dem fördernden Saugband angeordnet ist. Die zweite Resonatorhälfte 8 ist auf der gegenüberliegenden, offenen Seite des Strangführungskanals angeordnet. Seitlich begrenzt ist der Strangführungskanal durch die Kanalwangen 9. Obere und zweite Resonatorhälften 7 und 8 sind in den Figuren 2 mit einer halbkreisförmigen Gehäuseform dargestellt, wobei sich der Messbereich zwischen diesen über den gesamten Bereich zwischen den Kanalwangen 9 erstreckt und dabei auch das Saugband 2 miteinschließt. Fig. 2b zeigt die geöffnete Position, in der, beispielsweise für ein Auswechseln des Saugbandes 2, der Saugbandförderer zusammen mit der ersten Resonatorhälfte 7 angehoben ist. Hierdurch entsteht ein größerer Abstand zwischen der ersten Resonatorhälfte 7 und der zweiten Resonatorhälfte 8, so dass kein Messbetrieb in der geöffneten Position möglich ist. Zum präzisen Wiederanbringen der oberen oder der zweiten Resonatorhälfte 7, 8 können Passmittel an den Kanalwangen vorgesehen sein, gegen die beispielsweise mit Kraft die beiden Resonatorhälften in ihre genaue Position gegeneinander verspannen und die so eine genaue relative Positionierung sicherstellen.

Das Ein- und Auskoppeln der Mikrowellensignale erfolgt an der zweiten Resonatorhälfte 8, die fest an der Zigarettenmaschine befestigt ist. Die Kanalwangen 9 sind zumindest im Bereich des Sensors aus Kunststoff oder Keramik hergestellt und haben einen konstanten Einfluss auf das Messfeld des Resonators, der durch eine tarierende Messung der Leerresonanzwerte eliminiert werden kann.

Wie auch mit Bezug auf Fig. 1b dargestellt, befindet sich die Trimmerscheiben 5 nahe der Zone 4, in der die Strangformung erfolgt. Die Strangformung erfolgt außerhalb des Saugbandförderers, wobei die Trimmerscheiben überschüssigen Tabak vom Saugband abtrennen. Ein gut geeigneter Ort zur Platzierung des Sensorsystems liegt zwischen den Trimmerscheiben 5 und der Zone der Strangformung 4.

Um den Einfluss von Temperaturschwankungen am Ort der Messeinrichtung auf die Messung zu minimieren, kann der Resonator gekapselt und beheizt werden. Das Heizen des Resonators wird im Betrieb so geregelt, dass der Resonator stets eine konstante Temperatur aufweist. Es besteht bei der erfindungsgemäßen Anordnung die Gefahr, dass sich während der Produktion Tabak auf der unteren Halbschale ansammelt. Diese kann mit Hilfe von Druckluft auch im laufenden Betrieb entfernt werden.

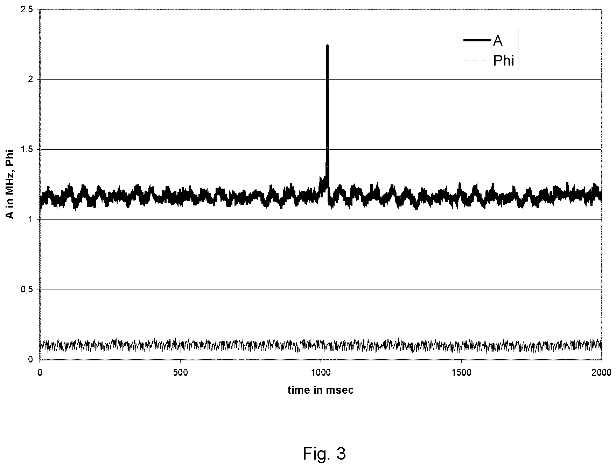

Figur 3 zeigt den Verlauf der Messsignale eines leeren Saugbandes mit einer Verbindungstelle. Aufgetragen sind die Messwerte A [MHz] und Phi. Der Messwert A bezeichnet hierbei die Resonanzwertverschiebung wie sie gegenüber einer Messung des leeren Resonators auftritt. Diese Resonanzfrequenzverschiebung ist abhängig von der Masse der sich in dem Messbereich zwischen den Resonatorhälften befindlichen Materialen. Phi bezeichnet einen masseunabhängigen Feuchtewert, der beispielsweise aus dem Quotienten der Resonanzwertverschiebung und der Resonanzverbreiterung bestimmt werden kann. Fig 3 zeigt, dass in der Verbindungstelle des Saugbandes einen Peak im A-Wert auftritt, während der Phi-Wert im Wesentlichen unverändert bleibt. Dieses Verhalten der Messsignale kann dazu genutzt werden, die Verbindungsstelle im Saugband bei der tarierenden Messung zu erkennen. Hierdurch kann dann eine Positionsbestimmung vorgenommen werden, so dass beispielsweise bei der einer späteren ungleichmäßigen Tabakverteilung der Einfluss der Verbindungsstelle über ihre Position berücksichtigt werden kann. Bei der Herstellung von 'Heat-not-Burn' Produkten ist der Tabakstrang in der Regel homogen gefüllt, so dass eine Positionsbestimmung entfallen kann und die Dichteerhöhung durch die Verbindungsstelle direkt in den A-Werten zu erkennen ist. Gleichzeitig tritt ein Minimum für den Mikrowellen-Feuchte-Wert Phi auf, da sich in der Verbindungsstelle zwischen Saugband und Tabak ein anderes Masseverhältnis vorliegt, bei dem der relative Masseanteil des Saugbandes zu Tabak größer als in den übrigen Positionen des Saugbandes ist. Die Masseerhöhung im Bereich der Verbindungsstelle kann an dem leeren Band gemessen und die gemessenen Tabakmassen an dieser Stelle des Bandes im Produktionsbetrieb korrigiert werden. Für die Korrektur des Signals der Bindungsstelle kann auch auf eine Positionsverfolgung mittels des Shaft-Encoder-Signals der Zigarettenmaschine abgestellt werden.

## Patentansprüche

1. Zigarettenmaschine mit einem Saugbandförderer (1) für die tabakverarbeitende Industrie, der einen Strangführungskanal aufweist, der an einer Seite durch ein Material förderndes Saugband (2) und angrenzend daran durch zwei einander gegenüberliegende Kanalwangen (9) begrenzt ist, **dadurch gekennzeichnet, dass** die Zigarettenmaschine eine elektromagnetische Messeinrichtung mit einem Resonator (6) umfasst, der zwei Resonatorhälften (7, 8) aufweist, von denen eine erste (7) auf der Seite des Strangführungskanals mit dem fördernden Saugband (2) und die zweite (8) auf der der ersten Resonatorhälfte (7) gegenüberliegenden Seite vorgesehen ist, wobei die erste Resonatorhälfte (7) mit dem beweglich montierten Saugbandförderer (1) verbunden ist, sodass sie zusammen mit dem Saugbandförderer (1) positioniert werden kann und an der zweiten Resonatorhälfte (8) die Mikrowellensignale ein- und ausgekoppelt werden, wobei die zweite Resonatorhälfte (8) fest an der Zigarettenmaschine befestigt ist

2. Zigarettenmaschine mit einem Saugbandförderer (1) nach Anspruch 1, **dadurch gekennzeichnet, dass** die elektromagnetische Messeinrichtung als ein Mikrowellenresonator (6) ausgebildet ist, dessen Resonatorhohlraum durch die beiden einander gegenüber liegenden Resonatorhälften (7, 8) gebildet wird.

3. Zigarettenmaschine nach Anspruch 1 oder 2, **dadurch gekennzeichnet, dass** die erste Resonatorhälfte (7) angrenzend an das Saugband (2) angeordnet ist.

4. Zigarettenmaschine nach einem der Ansprüche 1 bis 3, **dadurch gekennzeichnet, dass** die zweite Resonatorhälfte (8) angrenzend an den Strangführungskanal positioniert ist.

5. Zigarettenmaschine nach einem der Ansprüche 1 bis 4, **dadurch gekennzeichnet, dass** die elektromagnetische Messeinrichtung mit einer Heizeinrichtung ausgestattet ist, die eine oder beide Resonatorhälften (7, 8) beheizt.

6. Zigarettenmaschine nach einem der Ansprüche 1 bis 5, **dadurch gekennzeichnet, dass** eine Drucklufteinrichtung vorgesehen ist, um die Resonatorhälften (7, 8) zu reinigen.

7. Zigarettenmaschine nach einem der Ansprüche 1 bis 6, **dadurch gekennzeichnet, dass** die elektromagnetische Messeinrichtung ausgebildet ist, um Masse/Dichte und/oder Feuchte des geförderten Materials zu messen.

8. Verwendung einer Zigarettenmaschine nach einem der Ansprüche 1 bis 7, **dadurch gekennzeichnet, dass** Messergebnisse der elektromagnetischen Messeinrichtung zur Messung einer Tabakmasse bezogen auf eine Referenzlänge herangezogen werden.

9. Verwendung nach Anspruch 8, **dadurch gekennzeichnet, dass** eine tarierende Messung an einem leeren Saugband (2) erfolgt, wobei die tarierende Messung an einer Position, an mehreren Positionen oder bei mindestens einem vollständigen Umlauf des Saugbandes (2) erfolgt.

10. Verwendung nach Anspruch 9, **dadurch gekennzeichnet, dass** die tarierende Messung an mindestens einer Position des Saugbandes (2) erfolgt und deren Messwert mit einem oder mehreren vorherigen Messwerten verglichen wird, wobei bei einer Abweichung um mehr als einen vorbestimmten Mindestbetrag, der neue Messwert verworfen wird.

11. Verwendung nach Anspruch 9, **dadurch gekennzeichnet, dass** die tarierende Messung an mindestens zwei Positionen des Saugbandes (2) erfolgt und die Messwerte mit einem oder mehreren vorherigen Messwerten verglichen werden, wobei als neuer Messwert derjenige mit der geringsten Abweichung zu den gespeicherten Messwerten übernommen wird.

12. Verwendung nach einem der vorangehenden Ansprüche 8 bis 11, **dadurch gekennzeichnet, dass** eine Leermessung für eine Verbindungsstelle des Saugbandes (2) erfolgt, wobei eine Auswerteeinrichtung dafür eingerichtet ist, über eine Peak-Erkennung in den Messsignalen die Verbindungstelle des Saugbandes (2) zu detektieren.

13. Verwendung nach Anspruch 12, **dadurch gekennzeichnet, dass** bei der Leermessung ein Massewert der Verbindungsstelle ermittelt wird, der zur Korrektur des gemessenen Massesignals an der Verbindungsstelle verwendet wird.

14. Verwendung nach Anspruch 12 oder 13, **dadurch gekennzeichnet, dass** die Auswerteeinrichtung bei Messung des leeren Saugbandes (2) die Verbindungstelle durch einen Anstieg eines für die Masse indikativen Messsignals und/oder einen fehlenden Anstieg eines für die Feuchte indikativen Messsignals erfasst.

15. Verwendung nach Anspruch 12 oder 13, **dadurch gekennzeichnet, dass** die Auswerteeinrichtung bei Messung des gefüllten Saugbandes (2) die Verbindungstelle durch einen Anstieg eines für die Masse indikativen Messsignals und/oder einen Abfall eines für die Feuchte indikativen Messsignals erfasst.

## Claims

1. A cigarette machine having a suction belt conveyor (1) for the tobacco-processing industry, which has a rod guide channel which is delimited on one side by a material-conveying suction belt (2) and, adjacent thereto, by two channel cheeks (9) lying opposite one another, **characterized in that** the cigarette machine comprises an electromagnetic measuring apparatus with a resonator (6) which has two resonator halves (7,8), a first resonator half (7) of which is provided on the side of the rod guide channel with the conveying suction belt (2) and the second resonator half (8) of which is provided on the side lying opposite the first resonator half (7), wherein the first resonator half (7) is connected to the movably mounted suction belt conveyor (1) so that it can be positioned together with the suction belt conveyor (1) and the microwave signals are coupled in and out at the second resonator half (8), the second resonator half (8) being fixedly attached to the cigarette machine.

2. The cigarette machine having a suction belt conveyor (1) according to Claim 1, **characterized in that** the electromagnetic measuring apparatus is configured as a microwave resonator (6), the resonator cavity of which is formed by the two resonator halves (7,8) lying opposite one another.

3. The cigarette machine according to Claim 1 or 2, **characterized in that** the first resonator half (7) is arranged adjacent to the suction belt (2).

4. The cigarette machine according to any one of Claims 1 to 3, **characterized in that** the second resonator half (8) is arranged adjacent to the rod guide channel.

5. The cigarette machine according to any one of Claims 1 to 4, **characterized in that** the electromagnetic measuring apparatus is equipped with a heating apparatus which heats one or both of the resonator halves (7,8).

6. The cigarette machine according to any one of Claims 1 to 5, **characterized in that** a compressed air apparatus is provided in order to clean the resonator halves (7,8).

7. The cigarette machine according to any one of Claims 1 to 6, **characterized in that** the electromagnetic measuring apparatus is configured to measure the mass/density and/or moisture of the conveyed material.

8. Use of a cigarette machine according to any one of Claims 1 to 7, **characterized in that** measurement results of the electromagnetic measuring apparatus are utilized to measure a tobacco mass in relation to a reference length.

9. Use according to Claim 8, **characterized in that** a taring measurement is carried out on an empty suction belt (2), wherein the taring measurement is carried out in one position, in multiple positions or during at least one complete revolution of the suction belt (2).

10. Use according to Claim 9, **characterized in that** the taring measurement is carried out in at least one position of the suction belt (2) and the measured value thereof is compared with one or more previous measured values, wherein in the event of a deviation by more than a predetermined minimum amount, the new measured value is discarded.

11. Use according to Claim 9, **characterized in that** the taring measurement is carried out in at least two positions of the suction belt (2) and the measured values are compared with one or more previous measured values, wherein that measured value with the smallest deviation from the stored measured values is adopted as the new measured value.

12. Use according to any one of the preceding Claims 8-11, **characterized in that** an empty measurement is carried out for a joint of the suction belt (2), wherein an evaluation apparatus is designed to detect the joint of the suction belt (2) via a peak recognition in the measurement signals.

13. Use according to Claim 12, **characterized in that**, during the empty measurement, a mass value of the joint is determined, which is used for the correction of the measured mass signal at the joint.

14. Use according to Claim 12 or 13, **characterized in that**, during the measurement of the empty suction belt (2), the evaluation apparatus captures the joint by a rise in a measurement signal which is indicative of the mass and/or a lack of a rise in a measurement signal which is indicative of the moisture.

15. Use according to Claim 12 or 13, **characterized in that**, during the measurement of the filled suction belt (2), the evaluation apparatus captures the joint by a rise in a measurement signal which is indicative of the mass and/or a drop in a measurement signal which is indicative of the moisture.

## Revendications

1. Confectionneuse de cigarettes avec une bande transporteuse d'aspiration (1) pour l'industrie du tabac, laquelle bande présente un canal de guidage de boudin qui est délimité sur un côté par une bande d'aspiration (2) transportant un matériau et, de manière adjacente à celle-ci, par deux parois de canal (9) opposées l'une à l'autre, **caractérisée en ce que** la confectionneuse de cigarettes comprend un dispositif de mesure électromagnétique avec un résonateur (6), lequel présente deux moitiés de résonateur (7, 8), la première moitié (7) étant prévue sur le côté du canal de guidage de boudin avec la bande d'aspiration (2) transporteuse et la deuxième moitié (8) étant prévue sur le côté opposé à la première moitié de résonateur (7), la première moitié de résonateur (7) étant reliée à la bande transporteuse d'aspiration (1) montée de façon mobile, de telle sorte qu'elle peut être positionnée conjointement avec la bande transporteuse d'aspiration (1) et que les signaux micro-ondes sont couplés à l'entrée et à la sortie du deuxième moitié résonateur (8), le deuxième moitié résonateur (8) étant fixé à la confectionneuse de cigarettes.

2. Confectionneuse de cigarettes avec une bande transporteuse d'aspiration (1) selon la revendication 1, **caractérisée en ce que** le dispositif de mesure électromagnétique est formé comme un résonateur à micro-ondes , dont la cavité de résonateur est formée par les deux moitiés de résonateur (7, 8) situées de façon opposée l'une à l'autre.

3. Confectionneuse de cigarettes selon la revendication 1 ou 2, **caractérisée en ce que** la première moitié de résonateur (7) est disposée de façon adjacente à la bande d'aspiration (2).

4. Confectionneuse de cigarettes selon les revendications 1 à 3, **caractérisée en ce que** la deuxième moitié de résonateur (8) est positionnée de façon adjacente au canal de guidage de boudin.

5. Confectionneuse de cigarettes selon l'une des revendications 1 à 4, **caractérisée en ce que** le dispositif de mesure électromagnétique est muni d'un dispositif de chauffage, lequel chauffe l'une ou les deux moitiés de résonateur (7, 8).

6. Confectionneuse de cigarettes selon l'une des revendications 1 à 5, **caractérisée en ce qu'**un dispositif à air comprimé est prévu pour nettoyer les moitiés de résonateur (7, 8).

7. Confectionneuse de cigarettes selon l'une des revendications 1 à 6, **caractérisée en ce que** le dispositif de mesure électromagnétique est formé pour mesurer la masse/la densité et/ou l'humidité du matériau transporté.

8. Utilisation d'une confectionneuse de cigarettes selon l'une des revendications 1 à 7, **caractérisée en ce que** les résultats de mesure du dispositif de mesure électromagnétique peuvent être utilisés pour la mesure d'une masse de tabac, rapportée à une longueur de référence.

9. Utilisation selon la revendication 8, **caractérisé en ce qu'**une mesure de tarage est effectuée sur une bande d'aspiration (2) vide, la mesure de tarage étant effectuée sur une position, sur plusieurs positions ou pour au moins un tour complet de la bande d'aspiration (2).

10. Utilisation selon la revendication 9, **caractérisée en ce que** la mesure de tarage est effectuée sur au moins une position de la bande d'aspiration (2) et **en ce que** sa valeur de mesure est comparée à une ou plusieurs valeurs de mesure précédentes, la nouvelle valeur de mesure étant rejetée dans le cas d'un écart dépassant une certaine valeur minimum prédéfinie.

11. Utilisation selon la revendication 9, **caractérisée en ce que** la mesure de tarage est effectuée sur au moins deux positions de la bande d'aspiration (2) et **en ce que** les valeurs de mesure sont comparées à une ou plusieurs valeurs de mesure précédentes, la nouvelle valeur de mesure avec le plus faible écart par rapport aux valeurs de mesure enregistrées étant acceptée.

12. Utilisation selon l'une des revendications précédentes 8-11, **caractérisée en ce qu'**une mesure à vide est effectuée pour une jonction de la bande d'aspiration (2), un dispositif d'analyse étant installé pour détecter la jonction de la bande d'aspiration (2) par une détection de pic dans les signaux de mesure.

13. Utilisation selon la revendication 12, **caractérisée en ce que,** lors de la mesure à vide, une valeur de masse de la jonction est déterminée, laquelle est utilisée pour la correction du signal de masse mesuré à la jonction.

14. Utilisation selon la revendication 12 ou 13, **caractérisée en ce que** le dispositif d'analyse détecte la jonction par une hausse d'un signal de mesure indicatif de la masse et/ou par l'absence d'une hausse d'un signal de mesure indicatif de l'humidité, lors de la mesure de la bande d'aspiration (2) vide.

15. Utilisation selon la revendication 12 ou 13, **caractérisée en ce que** le dispositif d'analyse détecte la jonction par une hausse d'un signal de mesure indicatif de la masse et/ou par une baisse d'un signal de mesure indicatif de l'humidité, lors de la mesure de la bande d'aspiration (2) chargée.
